# FASCICULE DE BREVET EUROPEEN

(11) **EP 2 179 502 B1**
(45) Date de publication et mention de la délivrance du brevet: **13.06.2018**
(21) Numéro de dépôt: 08789320.2
(22) Date de dépôt: 16.07.2008
(51) Int. Cl.: H02P 25/04, E06B 9/68

(54) **DISPOSITIF D'ALIMENTATION D'UN ACTIONNEUR DOMOTIQUE ET PROCÉDÉ DE FONCTIONNEMENT D'UN TEL DISPOSITIF**
STROMVERSORGUNGSEINHEIT FÜR EIN HAUSAUTOMATISIERUNGSSTELLGLIED UND VERFAHREN ZUM BETRIEB DER EINHEIT
POWER SUPPLY UNIT FOR A HOME AUTOMATION ACTUATOR AND METHOD OF OPERATION OF SAID UNIT

(30) Priorité: 20.07.2007 FR 0705278
(43) Date de publication de la demande: 28.04.2010
(73) Titulaire: SOMFY ACTIVITES SA, 74300 Cluses (FR)
(72) Inventeur: BRUNO, Serge, F-74460 Marnaz (FR)
(74) Mandataire: Novaimo
(86) Numéro de dépôt international: PCT/IB2008/052850
(87) Numéro de publication internationale: WO 2009/013669

(56) Documents cités:
- EP-A- 1 107 421
- FR-A- 2 848 034
- US-A- 4 678 985
- US-A1- 2002 118 552

## Description

L'invention concerne un actionneur comprenant un moteur électrique utilisé pour manoeuvrer un élément mobile de fermeture, d'occultation, de protection solaire ou d'écran dans un bâtiment.

Quand un tel actionneur, normalement alimenté sur le réseau commercial alternatif, comprend un récepteur d'ordres de type électronique, par exemple un récepteur radiofréquences, ce dernier doit être alimenté en permanence. Il en résulte une consommation électrique faible, rapportée à un seul actionneur, mais pouvant devenir significative dans un bâtiment équipé de nombreux actionneurs.

L'invention a pour but d'annuler, au moins partiellement, la consommation en veille de l'actionneur, et d'optimiser son rendement énergétique global.

Un problème de même type a déjà été résolu dans les domaines des téléviseurs, des magnétoscopes ou des photocopieurs.

La demande de brevet EP 1 783 887 décrit les solutions couramment employées : coupure complète de l'alimentation par le réseau commercial alternatif au moment du passage en mode veille et utilisation d'une source électrique séparée, de type continu, dans le mode veille. Dans cette demande, la source séparée est une pile sèche, non rechargeable, de capacité suffisante pour durer 30 ans.

La demande de brevet JP 2006149029 prévoit que la source utilisée en mode veille soit constituée d'un moyen de stockage qui puisse être rechargé dans un premier mode de veille.

Dans la demande de brevet JP 6349139 la recharge d'un condensateur de stockage ou d'une batterie rechargeable a lieu uniquement pendant l'utilisation de l'appareillage (magnétoscope). Cette demande prévoit la déconnexion complète du secteur pendant les phases de veille, au moyen d'un relais à ouverture. Ce relais est alimenté par le condensateur de stockage pendant les phases de veille, ce qui induit un besoin de recharges fréquentes.

Enfin, dans les documents de l'art antérieur prévoyant la recharge d'un élément de stockage destiné à assurer l'alimentation en mode veille, l'énergie prélevée sur le secteur pour cette recharge s'ajoute à l'énergie normalement fournie à l'appareillage. Il en résulte une fausse économie d'énergie sur le plan global.

Il est connu d'effectuer un prélèvement série sur une tension d'alimentation d'une charge. C'est le cas en particulier des dispositifs permettant l'alimentation d'interrupteurs électroniques venant en remplacement d'interrupteurs mécaniques et situés à distance de la charge électrique à commander. La demande de brevet WO 2004/051389 (ou FR 2 848 034) de la demanderesse illustre ce type de prélèvement. Dans un tel dispositif, on fait circuler un faible courant dans une charge commandée par un interrupteur électronique pour pouvoir prélever une tension aux bornes d'un shunt en série avec cette charge, cette tension servant à alimenter l'interrupteur électronique. Pendant le mode de veille, un courant est donc absorbé sur le secteur.

Il en est de même dans le brevet US 4,678,985.

Dans ces documents, un condensateur de filtrage 50 ou 60 Hz ne saurait de plus être assimilé à un élément de stockage permettant l'alimentation autonome du dispositif pendant des périodes de plusieurs heures.

Le but de l'invention est de fournir un dispositif d'alimentation d'un actionneur palliant les inconvénients évoqués précédemment et améliorant les dispositifs d'alimentation connus de l'art antérieur. En particulier, l'invention propose un dispositif d'alimentation d'un actionneur permettant de charger un élément de stockage d'énergie avec un très bon rendement énergétique afin d'améliorer le rendement énergétique global de l'actionneur. Le dispositif est tel que l'actionneur est totalement déconnecté du réseau électrique en mode de veille. L'invention concerne aussi un procédé de fonctionnement d'un tel dispositif d'alimentation.

Le dispositif d'alimentation selon l'invention est défini par la revendication 1.

Différents modes de réalisation du dispositif sont définis par les revendications dépendantes 2 à 12.

Le procédé de fonctionnement selon l'invention est défini par la revendication 13.

Différents modes d'exécution du procédé sont définis par les revendications dépendantes 14 et 15.

Le dessin annexé représente, à titre d'exemple, un mode de réalisation d'un dispositif d'alimentation selon l'invention.
La figure 1 représente une installation comprenant un actionneur selon l'invention.
La figure 2 représente le dispositif d'alimentation d'un actionneur selon l'invention, ainsi que les relations entre ce dispositif d'alimentation et d'autres éléments de l'actionneur.
La figure 3 représente schématiquement les modes d'actionnement d'interrupteurs commandés inclus dans le dispositif d'alimentation.
La figure 4 représente schématiquement le mode de fonctionnement d'un moyen de détection secteur inclus dans le dispositif d'alimentation.

L'invention repose sur la remarque qu'un actionneur comprenant un moteur électrique est dimensionné pour travailler dans une plage étendue de tensions du réseau commercial alternatif, et en particulier si cette tension est inférieure de 10% à sa valeur nominale.

Ainsi, un actionneur 230 V doit fournir un couple au moins égal au couple nominal, ou un effort au moins égal à l'effort nominal, sur sa sortie mécanique quand la tension du secteur alternatif est égale à 209 V. Il s'agit d'une contrainte normative qui s'explique pour des questions de sécurité : puisque le fournisseur d'énergie ne garantit la valeur de la tension du secteur alternatif que dans une plage de +/- 10 %, il est indispensable par exemple qu'une porte basculante puisse être manoeuvrée de manière sûre et sans chuter, dans tout cet intervalle de tensions.

Il en résulte qu'un prélèvement de puissance agissant en série, donc de manière soustractive par rapport à l'appareillage alimenté, n'affectera pas son fonctionnement sauf si le prélèvement est important et qu'il correspond à une période où la tension du secteur alternatif est en limite basse.

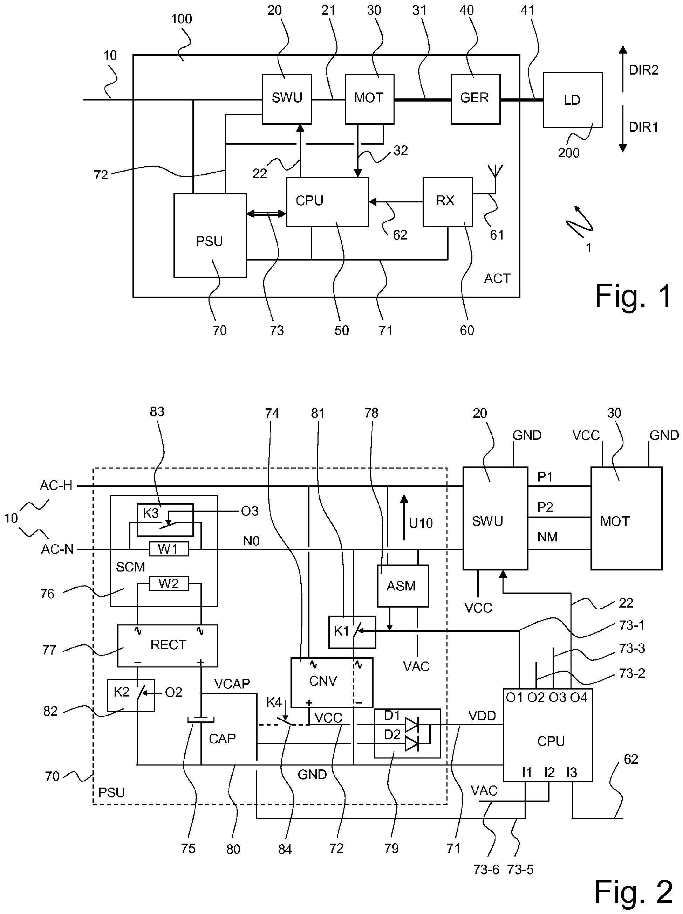

L'installation 1 de la figure 1 comprend un actionneur 100 désigné par ACT permettant l'entraînement d'un élément mobile 200 désigné par LD.

L'actionneur est alimenté sur le réseau alternatif commercial ou secteur 10. Il comprend une unité de commutation 20, désignée par SWU, un moteur électrique 30 désigné par MOT, un réducteur 40 désigné par GER, un microcontrôleur 50 désigné par CPU, un récepteur radio 60 désigné par RX et une unité d'alimentation 70 désignée par PSU.

L'unité de commutation SWU est raccordée au secteur 10 et contient des interrupteurs commandés, non représentés, par exemple des relais, permettant d'appliquer ou non la tension du secteur 10 sur une ligne électrique 21, raccordée au moteur MOT. Cette ligne électrique 21 comprend un conducteur neutre moteur NM, un premier conducteur de phase moteur P1 et un deuxième conducteur de phase moteur P2. Selon que la tension du secteur est appliquée entre conducteur de neutre moteur et premier conducteur de phase moteur, respectivement deuxième conducteur de phase moteur, le moteur tourne dans un premier sens, respectivement un deuxième sens. Une ligne de commande 22 est connectée entre le microcontrôleur et l'unité de commutation pour véhiculer les signaux de commande permettant d'assurer ces commutations.

Alternativement, le moteur est de type à courant continu. Dans ce cas, l'unité de commutation comprend des moyens redresseurs nécessaires, et le changement de sens de rotation est assuré par inversion des polarités appliquées aux deux fils d'alimentation du moteur.

Le moteur comprend un arbre moteur 31 raccordé au réducteur GER. Le moteur comprend également des moyens de mesure de quantités électromécaniques (capteur d'intensité, de vitesse ou position rotor, par exemple des capteurs à effet Hall) permettant d'obtenir une information sur son état de fonctionnement, laquelle information est transmise au microcontrôleur par une liaison d'information moteur 32.

Le réducteur GER comprend un arbre de sortie 41 qui constitue l'arbre actionneur et qui est raccordé à l'élément mobile LD. Ce dernier est entraîné dans une première direction DIR1 si le moteur tourne dans le premier sens et dans une deuxième direction DIR2 si le moteur tourne dans le deuxième sens.

Le récepteur radio RX est raccordé à une antenne 61 et au microcontrôleur CPU par une ligne de transmission 62.

L'unité d'alimentation PSU est raccordée au secteur 10 selon des moyens qui seront détaillés plus bas. Elle est reliée au récepteur RX et au microcontrôleur par une ligne d'alimentation en veille 71 et elle est reliée à l'unité de commutation SWU et au moteur MOT par une ligne d'alimentation en activité 72 qui fournit la puissance nécessaire à l'alimentation des relais ou des capteurs à effet Hall.

L'unité d'alimentation PSU est également raccordée au microcontrôleur CPU par un bus de signaux 73.

La figure 2 représente l'unité d'alimentation PSU, ainsi que les relations entre cette unité avec d'autres éléments de l'actionneur, en particulier l'unité de commutation et le microcontrôleur.

De cette unité d'alimentation partent en particulier les deux lignes d'alimentation, en veille 71 et en activité 72, désignées respectivement par VDD et VCC.

Contrairement à la figure 1, les alimentations sont cette fois représentées complètement : le secteur 10 comprend un conducteur de phase AC-H et un conducteur de neutre AC-N, les unités électroniques de l'actionneur ont une masse électrique commune 80 désignée par GND.

L'unité d'alimentation PSU comprend un convertisseur alternatif continu 74 de type abaisseur désigné par CNV. Il s'agit par exemple d'une alimentation à découpage. Le problème de tels convertisseurs est qu'ils présentent un rendement optimisé pour une puissance de sortie égale à la puissance nominale, par exemple quand le convertisseur alimente un relais du circuit de commutation SWU et/ou les capteurs contenus dans le moteur MOT, alors que ce rendement se dégrade considérablement quand la puissance de sortie est beaucoup plus faible que la puissance nominale, par exemple si le convertisseur alimente seulement le microcontrôleur et le récepteur radio. C'est pourquoi le convertisseur CNV n'est pas utilisé pour alimenter ces deux éléments en mode veille.

Le convertisseur CNV est directement raccordé au conducteur de phase AC-H par une première entrée alternative, alors qu'une deuxième borne alternative est reliée à un premier interrupteur commandé 81 référencé par K1 qui est également raccordé à un conducteur interne de neutre N0 qui sera détaillé plus loin. La commande de l'interrupteur commandé K1 est raccordée à une première sortie O1 du microcontrôleur par un premier fil 73-1 du bus de signaux 73. Une borne négative du convertisseur est reliée à la masse électrique commune GND tandis qu'une borne positive du convertisseur est reliée à la ligne d'alimentation en activité VCC.

Un pôle positif d'un élément de stockage 75 référencé par CAP, par exemple un supercondensateur ou une batterie rechargeable, est raccordée à une borne positive de sortie d'un pont redresseur 77 référencé par RECT dont les bornes alternatives d'entrée sont raccordées à un moyen de couplage série 76 référencé par SCM. Un pôle négatif de l'élément de stockage CAP est raccordé à la masse électrique commune GND.

Une borne négative de sortie du pont redresseur RECT est également raccordée à la masse électrique commune par l'intermédiaire d'un deuxième interrupteur commandé 82 référencé par K2. La commande de l'interrupteur commandé K2 est raccordée à une deuxième sortie 02 du microcontrôleur par un deuxième fil 73-2 du bus de signaux 73.

Le moyen de couplage série SCM comprend un premier dipôle W1 intercalé entre le conducteur de neutre AC-N et le conducteur interne de neutre N0. Ce dipôle W1 est prévu pour présenter une faible chute de tension, de l'ordre de quelques volts, voire même quelques dixièmes de volts, lorsqu'il est parcouru par le courant nominal de l'actionneur quand le moteur absorbe lui-même un courant nominal. Préférentiellement, le premier dipôle W1 est le bobinage primaire d'un transformateur élévateur, comprenant quelques spires.

Ainsi, le potentiel du conducteur de neutre interne N0 se trouve-t-il très proche du potentiel du conducteur de neutre AC-N.

Le moyen de couplage série SCM comprend un deuxième dipôle W2 raccordé aux bornes alternatives d'entrée du pont redresseur RECT. Préférentiellement, le deuxième dipôle W2 est le bobinage secondaire d'un transformateur élévateur, couplé au bobinage primaire par un circuit magnétique.

Alternativement, le premier et le deuxième dipôle sont confondus en un dipôle commun : il y a alors liaison galvanique entre le pont redresseur et le conducteur de neutre AC-N. Dans ce cas, le dipôle commun est préférentiellement un assemblage parallèle de plusieurs diodes de même polarité dans une première branche et d'une diode de polarité opposée dans une deuxième branche parallèle à la première, selon un montage connu de l'art antérieur.

Un moyen de couplage série du type à transformateur permet la charge du moyen de stockage avec un excellent rendement énergétique contrairement aux systèmes à transformateurs connus de l'art antérieur et branchés en parallèle sur le réseau. On prend par exemple 20 spires au primaire et 200 spires au secondaire. Un transformateur d'intensité est également utilisable.

Un troisième interrupteur commandé 83 référencé par K3 est disposé en parallèle sur le premier dipôle, alternativement sur le dipôle commun, de manière à pouvoir le court-circuiter. La commande de l'interrupteur commandé K3 est raccordée à une troisième sortie 03 du microcontrôleur par un troisième fil 73-3 du bus de signaux 73.

Une quatrième sortie 04 du microcontrôleur est raccordée à la ligne de commande 22 de l'unité de commutation SWU.

Le pôle positif de l'élément de stockage CAP est raccordé à une ligne intermédiaire VCAP et, par l'intermédiaire d'un cinquième fil 73-5 du bus de signaux 73, est raccordée à une première entrée I1 du microcontrôleur CPU. Cette première entrée est de type analogique et permet la mesure par le microcontrôleur de la tension UCAP aux bornes de l'élément de stockage.

La ligne intermédiaire VCAP est également connectée à une deuxième entrée d'un distributeur 79 dont une première entrée est connectée à la ligne d'alimentation en activité VCC et dont une sortie est connectée à la ligne d'alimentation en veille VDD. Le rôle du distributeur 79 est de faire en sorte que la ligne d'alimentation en veille VDD soit raccordée à la ligne d'alimentation en activité VCC lorsque l'actionneur est en état d'activité et qu'elle soit raccordée à la ligne intermédiaire lorsque l'actionneur est en état de veille.

Préférentiellement, le distributeur 79 comprend une première diode D1 dont l'anode est raccordée à la ligne d'alimentation en activité VCC et une deuxième diode D2 dont l'anode est raccordée à la ligne intermédiaire VCAP, les deux cathodes étant reliées, constituant la sortie du distributeur, et raccordées à la ligne d'alimentation en veille VDD.

Alternativement, le distributeur est réalisé à l'aide d'interrupteurs commandés.

Cependant, l'invention ne pourrait être mise en oeuvre sans résoudre le problème posé par la décharge complète de l'élément de stockage, situation qui se présente lors d'un premier raccordement au secteur, ou se présente également lors d'une coupure de longue durée.

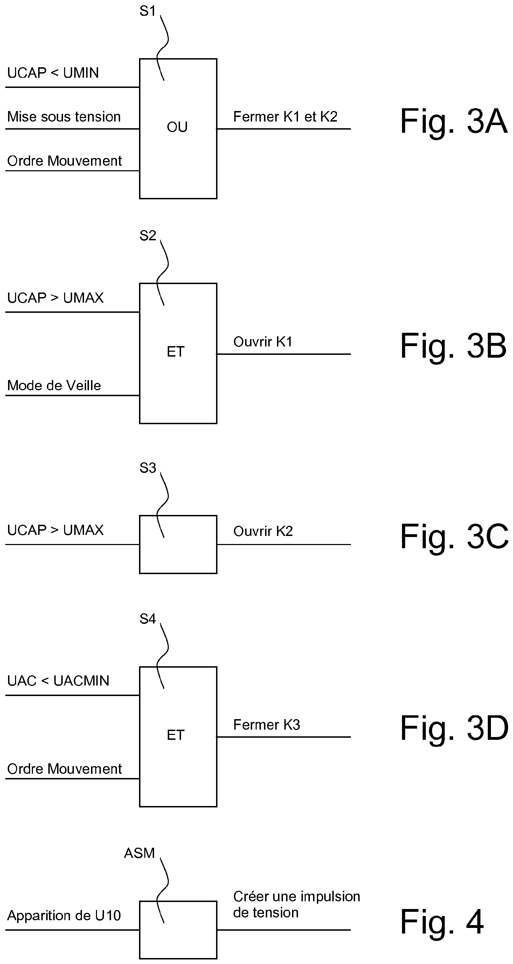

Un moyen de détection secteur 78 désigné par ASM est raccordé par une première entrée de détection secteur au conducteur de phase AC-H et par une deuxième entrée de détection au conducteur interne de neutre N0. Ce moyen permet de générer, sur une première sortie de détection secteur, une impulsion électrique de commande dans le cas où la tension secteur U10 est appliquée au moyen de détection ASM alors que ce moyen est initialement hors tension, comme représenté en Figure 4. Le moyen de détection secteur ASM comprend au moins un condensateur pour réaliser cette fonction.

Cette fonction est essentielle, puisqu'elle permet d'utiliser un moyen de stockage supportant une décharge complète, par exemple suite à un stockage prolongé avant première installation, ou encore suite à une coupure de la tension secteur pendant une grande durée.

La première sortie du moyen de détection ASM est raccordée sur la commande du premier interrupteur commandé K1, par liaison avec le premier fil 73-1 du bus de signaux 73.

Il suffit que l'impulsion électrique de commande délivrée par le moyen de détection ASM soit de courte durée, puisqu'elle permet, suite à la fermeture du premier interrupteur commandé, d'activer le convertisseur CNV qui ensuite fournit l'énergie nécessaire à l'alimentation du microcontrôleur qui confirme alors la fermeture du premier interrupteur commandé K1.

Une deuxième sortie de détection secteur du moyen de détection secteur référencée par VAC délivre une tension UAC proportionnelle à la tension efficace présente entre le conducteur de phase et le conducteur interne de neutre et est raccordée à une deuxième entrée I2 du microcontrôleur, de type analogique, par un sixième fil 73-6 du bus de signaux 73.

Une troisième entrée I3 du microcontrôleur, de type logique, est raccordée à la ligne de transmission 62.

La figure 3 représente schématiquement les modes d'actionnement des interrupteurs commandés K1 à K3 inclus dans le dispositif d'alimentation PSU.

Cette représentation a lieu sous forme de circuits ou blocs logiques alors que la commande est effectuée le plus souvent par le microcontrôleur CPU en activant ses différentes sorties en fonction de l'état des entrées et en fonction de son état interne. Cependant, dans le cas du premier interrupteur commandé, la commande peut aussi être activée par le moyen de détection secteur ASM.

La figure 3A représente un premier bloc logique S1 relatif à l'activation de fermeture du premier interrupteur commandé K1. Un signal de fermeture est activé si la tension UCAP aux bornes de l'élément de stockage est inférieure à un premier seuil UMIN, ou si le moyen de détection secteur ASM détecte une mise sous tension (et génère alors une impulsion de commande sur sa première sortie), ou si un ordre de mouvement a été reçu par le récepteur RX et transmis au microcontrôleur par la ligne de transmission 62.

Dans ces trois cas, le premier interrupteur commandé K1 se ferme, ce qui a pour effet de mettre sous tension le convertisseur CNV et de faire apparaître une tension de service sur la ligne d'alimentation en activité VCC.

Un ordre de mouvement peut alors être exécuté, puisque l'unité de commutation SWU dispose alors d'une tension d'alimentation suffisante et puisque les capteurs nécessaires à détecter tout changement de position du rotor moteur sont également alimentés.

Pour éviter de prélever inutilement de l'énergie sur l'élément de stockage, le distributeur active la conduction de D1 et le blocage de D2 ce qui a lieu automatiquement pour peu que le potentiel de la ligne VCC soit supérieur à celui de la ligne VCAP.

La fermeture du deuxième interrupteur commandé K2 a lieu simultanément, ce qui permet la recharge de l'élément de stockage par l'intermédiaire du moyen de couplage série et du pont redresseur.

Si le moyen de couplage série est un transformateur, le courant de charge de l'élément de stockage CAP sera d'autant plus grand que le courant circulant dans les conducteurs de neutre est important. Le courant de charge sera donc important lors de l'exécution d'un ordre de mouvement nécessitant l'alimentation du moteur.

On remarque qu'il suffit que le convertisseur CNV soit alimenté, même si aucun ordre de mouvement n'est exécuté et donc que le moteur n'est pas alimenté, pour que la recharge ait lieu grâce au seul courant absorbé par le convertisseur. Cependant, elle peut s'avérer inutilement longue. Dans ce cas, on utilisera avec profit un quatrième interrupteur commandé 84 référencé par K4, représenté en trait pointillé, raccordé à la sortie positive du convertisseur et au pôle positif de l'élément de stockage. Ainsi, la recharge rapide de l'élément de stockage par le convertisseur CNV devient possible, en la limitant aux circonstances suivantes :
- première mise sous tension de l'actionneur, ou réapparition de la tension secteur après une coupure de longue durée,
- décharge naturelle de l'élément de stockage lors d'un mode veille très prolongé.

On remarque que la charge de l'élément de stockage est rapide au travers de K4. La puissance électrique fournie par le convertisseur CNV est donc relativement importante et son rendement pendant cette charge est bon et en tout cas bien meilleur que si ce convertisseur était utilisé pour alimenter directement le microcontrôleur et les moyens de réception.

Dans tous les autres cas, l'élément de stockage est rechargé par le moyen de couplage série.

La figure 3B représente un deuxième bloc logique S2 relatif à l'activation d'ouverture du premier interrupteur commandé K1. Un signal d'ouverture a lieu si le microcontrôleur décide de passer en mode de veille et si, avant d'activer ce mode de veille, il constate que la tension UCAP a dépassé un deuxième seuil UMAX signifiant que l'élément de stockage est suffisamment rechargé.

Dès lors, l'interrupteur K1 est ouvert, et l'actionneur ne consomme strictement aucun courant sur le secteur.

Pendant cette phase de veille, c'est l'élément de stockage qui fournit l'énergie au microcontrôleur et au récepteur radio. Il y a donc décharge progressive de l'élément de stockage.

La figure 3C représente un troisième bloc logique S3 relatif à l'activation d'ouverture du deuxième interrupteur commandé K2. L'ouverture est activée si la tension aux bornes de l'élément de stockage atteint et dépasse le deuxième seuil UMAX.

De la même façon, serait ouvert le quatrième interrupteur commandé K4. Il s'agit dans tous les cas d'une fonction de sécurité qui ne doit être implantée que s'il existe un risque de détérioration de l'élément de stockage.

La figure 3D représente un quatrième bloc logique S4 relatif à l'activation de fermeture du troisième interrupteur commandé K3. Cet interrupteur commandé est surtout nécessaire dans le cas d'un dipôle commun présentant une chute de tension de quelques volts. Dans ce cas, il y a risque de tension insuffisante aux bornes du moteur dans l'hypothèse où la tension secteur serait à son niveau le plus bas, correspondant au seuil UAC-BAS (par exemple 0.9 UAC nominal). Le moteur risque alors de ne pouvoir démarrer du fait de la chute de tension supplémentaire ΔU aux bornes du moyen de couplage série SCM. On définit alors un seuil de tension secteur UACMIN égal à la somme de UAC-BAS et de la tension supplémentaire ΔU, et si la tension du secteur est inférieure à ce seuil alors qu'il y a présence d'un ordre de mouvement, on ferme le troisième interrupteur commandé K3 de manière à court-circuiter le moyen de couplage série.

On définit une durée maximum de veille T1 pendant laquelle l'actionneur doit pouvoir rester alimenté en veille par l'élément de stockage, c'est-à-dire, s'il s'agit d'un condensateur, que la tension UCAP passe progressivement de la valeur initiale UMAX, correspondant au deuxième seuil, à une valeur inférieure UMIN, correspondant au premier seuil et telle que l'alimentation est encore fonctionnelle. Cette durée T1 est choisie supérieure à la durée moyenne T0 séparant généralement deux manoeuvres consécutives. Par exemple, pour un volet roulant, on a une durée moyenne T0 voisine de 12 heures (une manoeuvre le matin, une le soir), et on prendra une durée maximum de veille T1 de 18 heures.

La capacité de stockage de l'élément de stockage et les différents éléments du couplage série sont donc dimensionnés de manière à :
- emmagasiner une énergie E1 pendant une durée de manoeuvre de moteur (par exemple 20 secondes s'il s'agit d'un volet roulant ou d'une porte de garage)
- restituer l'énergie E1 lorsque le mode veille est activé pendant la durée maximum de veille T1.

Par exemple on prendra un supercondensateur de capacité 10 Farads si la consommation de veille est 100 µA, pour UMAX égal à 3.3 V et UMIN égal à 2.7 V et la durée maximum de veille est choisie égale à 18 heures.

En définitive, lorsqu'il y a un usage normal de l'installation (au moins deux manoeuvres par jour), et sauf occasions très rares de tension secteur au minimum de la plage garantie, la recharge est toujours effectuée grâce au moyen de couplage série. L'énergie de recharge est prélevée sur la marge de sécurité de l'actionneur et ne retire rien à son caractère fonctionnel : seules les pertes par effet Joule dans le moteur ont à souffrir de la chute de tension occasionnée par le moyen de couplage série.

Pendant la veille, l'actionneur est totalement déconnecté du réseau puisque les interrupteurs commandés de l'unité de commutation sont ouverts. L'élément de stockage ne demande ni maintenance, ni remplacement périodique.

## Revendications

1. Dispositif d'alimentation (PSU) pour alimenter, depuis le secteur (10), un actionneur (100) de manoeuvre d'un écran domotique mobile (200) et comprenant un moteur électrique (30), des moyens (60) de réception d'ordres et un moyen (75) de stockage d'énergie permettant l'alimentation des moyens de réception d'ordres dans un mode de veille de l'actionneur, **caractérisé en ce qu'**aucun courant n'est absorbé sur le secteur pendant le mode de veille et **en ce qu'**il comprend un moyen de couplage série (SCM) pour recharger le moyen de stockage lorsqu'un courant est absorbé sur le secteur à travers ce moyen de couplage et un moyen de détection secteur (ASM) apte à déclencher la charge du moyen de stockage lors d'une première apparition de la tension secteur sur le dispositif d'alimentation.

2. Dispositif d'alimentation selon la revendication 1, **caractérisé en ce que** le moyen de couplage série comprend un enroulement primaire (W1) d'un transformateur connectable en série avec le moteur.

3. Dispositif d'alimentation selon la revendication 2, **caractérisé en ce que** le moyen de couplage série comprend un enroulement secondaire (W2) d'un transformateur alimentant un moyen de redressement (77) de tension dont la sortie est connectable au moyen de stockage.

4. Dispositif d'alimentation selon la revendication 1, **caractérisé en ce que** le moyen de couplage série comprend un montage antiparallèle de diodes, les bornes de ce montage étant connectables au moyen de stockage au travers d'un moyen de redressement de tension.

5. Dispositif d'alimentation selon l'une des revendications précédentes, **caractérisé en ce qu'**il comprend un moyen auxiliaire (CNV) de charge du moyen de stockage, activable par le moyen de détection secteur (ASM).

6. Dispositif d'alimentation selon l'une des revendications précédentes, **caractérisé en ce qu'**il comprend un moyen auxiliaire (CNV) de charge du moyen de stockage, le moyen auxiliaire de charge (CNV) étant directement raccordé à un premier interrupteur commandé (81) qui est également raccordé à un conducteur interne de neutre (N0), la fermeture du premier interrupteur commandé ayant pour effet de mettre sous tension le moyen auxiliaire (CNV) de charge, l'actionneur ne consommant strictement aucun courant sur le secteur quand le premier interrupteur est ouvert.

7. Dispositif d'alimentation selon l'une des revendications précédentes, **caractérisé en ce qu'**il comprend un deuxième interrupteur commandé (K2) dont la fermeture permet la recharge de l'élément de stockage par l'intermédiaire d'un moyen de couplage série et d'un pont redresseur.

8. Dispositif d'alimentation selon l'une des revendications précédentes, **caractérisé en ce qu'**il comprend un troisième interrupteur commandé (K3) dont la fermeture court-circuite le moyen de couplage série.

9. Dispositif d'alimentation selon l'une des revendications précédentes, **caractérisé en ce que** la capacité de l'élément de stockage est dimensionnée de manière à emmagasiner une énergie (E1) pendant une durée de manoeuvre du moteur et à restituer cette énergie (E1) lorsque le mode de veille est activé pendant une durée maximum de veille (T1).

10. Dispositif d'alimentation selon la revendication précédente, **caractérisé en ce que** la durée maximum de veille (T1) pendant laquelle l'actionneur reste alimenté par l'élément de stockage est choisie supérieure à la durée moyenne (T0) séparant deux manoeuvres consécutives.

11. Dispositif d'alimentation selon la revendication 9 ou 10, **caractérisé en ce que** la durée maximum de veille (T1) pendant laquelle l'actionneur reste alimenté par l'élément de stockage est supérieure à 12 heures.

12. Dispositif d'alimentation selon l'une des revendications précédentes, **caractérisé en ce qu'**il comprend un moyen (K3) apte à court-circuiter le moyen de couplage série si la tension secteur est inférieure à un seuil.

13. Procédé de fonctionnement d'un dispositif d'alimentation (PSU) pour alimenter, depuis le secteur (10), un actionneur (100) de manoeuvre d'un écran domotique mobile (200), l'actionneur comprenant un moteur électrique (30), des moyens (60) de réception d'ordres et un moyen (75) de stockage d'énergie permettant l'alimentation des moyens de réception d'ordres dans un mode de veille de l'actionneur, le procédé de fonctionnement étant **caractérisé en ce qu'**aucun courant n'est absorbé sur le secteur pendant le mode de veille, le dispositif d'alimentation comprenant un moyen de couplage série (SCM) pour recharger le moyen de stockage lorsqu'un courant est absorbé sur le secteur à travers ce moyen de couplage et un moyen de détection secteur (ASM) apte à déclencher la charge du moyen de stockage lors d'une première apparition de la tension secteur sur le dispositif d'alimentation, et le procédé étant **caractérisé en ce qu'**il comprend l'étape suivante :
- charger le moyen de stockage grâce au moyen de couplage série pendant que l'actionneur absorbe un courant sur le secteur.

14. Procédé de fonctionnement selon la revendication précédente, **caractérisé en ce qu'**il comprend l'étape suivante :
- charger le moyen de stockage grâce au moyen de couplage série pendant que l'actionneur absorbe un courant sur le secteur et tant que la tension de l'élément de stockage est inférieure à un seuil prédéterminé (UMAX).

15. Procédé de fonctionnement selon la revendication 13 ou 14, **caractérisé en ce qu'**il comprend l'étape suivante :
- alimenter les moyens de réception d'ordres exclusivement grâce au moyen de stockage tant que la tension aux bornes de l'élément de stockage est supérieure à un seuil prédéterminé (UMIN) et que l'actionneur est dans un mode de veille.

## Patentansprüche

1. Stromversorgungsvorrichtung (PSU), um ein Stellglied (100) zum Betätigen eines beweglichen Bildschirms zur Hausautomatisierung (200) von dem Stromnetz (10) mit Strom zu versorgen und umfassend einem Elektromotor (30), Mittel (60) zum Empfangen von Befehlen und ein Energiespeichermittel (75), das die Stromversorgung der Mittel zum Empfangen von Befehlen in einem Standby-Modus des Stellglieds ermöglicht, **dadurch gekennzeichnet, dass** während des Standby-Modus kein Strom im Stromnetz aufgenommen wird und **dadurch gekennzeichnet, dass** sie ein Reihenschaltungsmittel (SCM), um das Speichermittel wiederaufzuladen, wenn ein Strom im Stromnetz durch diese Kopplungsvorrichtung aufgenommen wird, und ein Erfassungsmittel des Stromnetzes (ASM) aufweist, das geeignet ist, das Laden des Speichermittels bei einem ersten Auftreten der Netzspannung an der Stromversorgungsvorrichtung auszulösen.

2. Stromversorgungsvorrichtung nach Anspruch 1, **dadurch gekennzeichnet, dass** das Reihenschaltungsmittel eine Primärwicklung (W1) eines Transformators aufweist, der mit dem Motor in Reihe geschaltet werden kann.

3. Stromversorgungsvorrichtung nach Anspruch 2, **dadurch gekennzeichnet, dass** das Reihenschaltungsmittel eine Sekundärwicklung (W2) eines Transformators aufweist, der ein Spannungsgleichrichtermittel (77) mit Strom versorgt, dessen Ausgang an das Speichermittel angeschlossen werden kann.

4. Stromversorgungsvorrichtung nach Anspruch 1, **dadurch gekennzeichnet, dass** das Reihenschaltungsmittel eine antiparallele DiodenAnordnung aufweist, wobei die Anschlussklemmen dieser Anordnung über ein Spannungsgleichrichtermittel an das Speichermittel angeschlossen werden können.

5. Stromversorgungsvorrichtung nach einem der vorhergehenden Ansprüche, **dadurch gekennzeichnet, dass** sie ein Hilfsmittel (CNV) zum Laden des Speichermittels aufweist, das durch das Erfassungsmittel des Stromnetzes (ASM) aktivierbar ist.

6. Stromversorgungsvorrichtung nach einem der vorhergehenden Ansprüche, **dadurch gekennzeichnet, dass** sie ein Hilfsmittel (CNV) zum Laden des Speichermittels aufweist, wobei das Hilfsmittel (CNV) direkt an einen ersten gesteuerten Schalter (81) angeschlossen ist, der ebenfalls an einen internen Neutralleiter (N0) angeschlossen ist, wobei das Schließen des ersten gesteuerten Schalters bewirkt, dass das Hilfsmittel (CNV) zum Laden unter Spannung gesetzt wird, wobei das Stellglied absolut keinen Strom im Stromnetz verbraucht, wenn der erste Schalter offen ist.

7. Stromversorgungsvorrichtung nach einem der vorhergehenden Ansprüche, **dadurch gekennzeichnet, dass** sie einen zweiten gesteuerten Schalter (K2) aufweist, dessen Schließen das Wiederaufladen des Speicherelements über ein Reihenschaltungsmittel und eine Gleichrichterbrücke ermöglicht.

8. Stromversorgungsvorrichtung nach einem der vorhergehenden Ansprüche, **dadurch gekennzeichnet, dass** sie einen dritten gesteuerten Schalter (K3) aufweist, dessen Schließen das Reihenschaltungsmittel kurzschließt.

9. Stromversorgungsvorrichtung nach einem der vorhergehenden Ansprüche, **dadurch gekennzeichnet, dass** die Kapazität des Speicherelements derart bemessen ist, um eine Energie (E1) während einer Betriebszeit des Motors zu speichern und diese Energie (E1) wieder abzugeben, wenn der Standby-Modus während einer maximalen Standby-Dauer (T1) aktiviert ist.

10. Stromversorgungsvorrichtung nach dem vorhergehenden Anspruch, **dadurch gekennzeichnet, dass** die maximale Standby-Dauer (T1), während der das Stellglied durch das Speicherelement mit Strom versorgt wird, länger als die durchschnittliche Dauer (T0) gewählt wird, die zwei aufeinanderfolgende Betätigungen trennt.

11. Stromversorgungsvorrichtung nach Anspruch 9 oder 10, **dadurch gekennzeichnet, dass** die maximale Standby-Dauer (T1), während der das Stellglied durch das Speicherelement mit Strom versorgt wird, mehr als 12 Stunden beträgt.

12. Stromversorgungsvorrichtung nach einem der vorhergehenden Ansprüche, **dadurch gekennzeichnet, dass** sie ein Mittel (K3) aufweist, das geeignet ist, das Reihenschaltungsmittel kurzzuschließen, wenn die Netzspannung niedriger als ein Schwellenwert ist.

13. Verfahren zum Betrieb einer Stromversorgungsvorrichtung (PSU), um ein Stellglied (100) zum Betätigen eines beweglichen Bildschirms zur Hausautomatisierung (200) von dem Stromnetz (10) mit Strom zu versorgen, wobei das Stellglied einen Elektromotor (30), Mittel (60) zum Empfangen von Befehlen und ein Energiespeichermittel (75) aufweist, das die Stromversorgung der Mittel zum Empfangen von Befehlen in einem Standby-Modus des Stellglieds ermöglicht, wobei das Verfahren zum Betrieb **dadurch gekennzeichnet ist, dass** während des Standby-Modus kein Strom im Stromnetz aufgenommen wird, wobei die Stromversorgungsvorrichtung ein Reihenschaltungsmittel (SCM), um das Speichermittel wiederaufzuladen, wenn ein Strom im Stromnetz durch diese Kopplungsvorrichtung aufgenommen wird, und ein Erfassungsmittel des Stromnetzes (ASM) aufweist, das geeignet ist, das Laden der Speichermittels bei einem ersten Auftreten der Netzspannung an der Stromversorgungsvorrichtung auszulösen, und wobei das Verfahren **dadurch gekennzeichnet ist, dass** es den folgenden Schritt aufweist:
- Laden des Speichermittels dank des Reihenschaltungsmittels, während das Stellglied einen Strom im Stromnetz aufnimmt.

14. Verfahren zum Betrieb nach dem vorhergehenden Anspruch, **dadurch gekennzeichnet, dass** es den folgenden Schritt aufweist:
- Laden des Speichermittels dank des Reihenschaltungsmittels, während das Stellglied einen Strom im Stromnetz aufnimmt und solange die Spannung des Speicherelements niedriger als ein vorbestimmter Schwellenwert (UMAX) ist.

15. Verfahren zum Betrieb nach Anspruch 13 oder 14, **dadurch gekennzeichnet, dass** es den folgenden Schritt aufweist:
- Versorgen der Mittel zum Empfangen von Befehlen dank des Speichermittels mit Strom, solange die Spannung an den Anschlussklemmen des Speicherelements größer als ein vorbestimmter Schwellenwert (UMIN) ist und das Stellglied in einem Standby-Modus ist.

## Claims

1. Power supply device (PSU) for supplying power from the mains (10) to an actuator (100) for manoeuvring a mobile home automation screen (200) and comprising an electric motor (30), command reception means (60) and an energy storage means (75) making it possible to supply power to the command reception means in a standby mode of the actuator, **characterized in that** no current is absorbed from the mains during the standby mode, and **in that** it comprises a series coupling means (SCM) for recharging the storage means when a current is absorbed from the mains through this coupling means and a mains detection means (ASM) able to trigger the charging of the storage means when the mains voltage first appears on the power supply device.

2. Power supply device according to Claim 1, **characterized in that** the series coupling means comprises a primary winding (W1) of a transformer able to be connected in series with the motor.

3. Power supply device according to Claim 2, **characterized in that** the series coupling means comprises a secondary winding (W2) of a transformer supplying power to a voltage rectification means (77) whose output is able to be connected to the storage means.

4. Power supply device according to Claim 1, **characterized in that** the series coupling means comprises an anti-parallel diode assembly, the terminals of this assembly being able to be connected to the storage means through a voltage rectification means.

5. Power supply device according to one of the preceding claims, **characterized in that** it comprises an auxiliary means (CNV) for charging the storage means, able to be activated by the mains detection means (ASM).

6. Power supply device according to one of the preceding claims, **characterized in that** it comprises an auxiliary means (CNV) for charging the storage means, the auxiliary charging means (CNV) being connected directly to a first commanded switch (81) that is also connected to an internal neutral conductor (N0), the closure of the first commanded switch bringing about the powering of the auxiliary charging means (CNV), the actuator strictly consuming no current from the mains when the first switch is open.

7. Power supply device according to one of the preceding claims, **characterized in that** it comprises a second commanded switch (K2) the closure of which enables the storage element to be recharged by way of a series coupling means and of a rectifier bridge.

8. Power supply device according to one of the preceding claims, **characterized in that** it comprises a third commanded switch (K3) the closure of which short-circuits the series coupling means.

9. Power supply device according to one of the preceding claims, **characterized in that** the capacitance of the storage element is sized so as to store energy (E1) for a manoeuvring duration of the motor and to recover this energy (E1) when the standby mode is activated for a maximum standby duration (T1).

10. Power supply device according to the preceding claim, **characterized in that** the maximum standby duration (T1) during which the actuator remains supplied with power by the storage element is chosen to be greater than the average duration (T0) separating two consecutive manoeuvres.

11. Power supply device according to Claim 9 or 10, **characterized in that** the maximum standby duration (T1) during which the actuator remains supplied with power by the storage element is greater than 12 hours.

12. Power supply device according to one of the preceding claims, **characterized in that** it comprises a means (K3) able to short-circuit the series coupling means if the mains voltage is below a threshold.

13. Method for operating a power supply device (PSU) for supplying power from the mains (10) to an actuator (100) for manoeuvring a mobile home automation screen (200), the actuator comprising an electric motor (30), command reception means (60) and an energy storage means (75) making it possible to supply power to the command reception means in a standby mode of the actuator, the operating method being **characterized in that** no current is absorbed from the mains during the standby mode, the power supply device comprising a series coupling means (SCM) for recharging the storage means when a current is absorbed from the mains through this coupling means and a mains detection means (ASM) able to trigger the charging of the storage means when the mains voltage first appears on the power supply device, and the method being **characterized in that** it comprises the following step:
- charging the storage means using the series coupling means while the actuator is absorbing a current from the mains.

14. Operating method according to the preceding claim, **characterized in that** it comprises the following step:
- charging the storage means using the series coupling means while the actuator is absorbing a current from the mains and as long as the voltage of the storage element is below a predetermined threshold (UMAX).

15. Operating method according to Claim 13 or 14, **characterized in that** it comprises the following step:
- supplying power to the command reception means exclusively using the storage means as long as the voltage across the terminals of the storage element is above a predetermined threshold (UMIN) and the actuator is in a standby mode.
